# FASCICULE DE BREVET EUROPEEN

(11) **EP 3 063 705 B1**
(45) Date de publication et mention de la délivrance du brevet: **06.12.2017**
(21) Numéro de dépôt: 14805979.3
(22) Date de dépôt: 22.10.2014
(51) Int. Cl.: G06K 19/02, G06K 19/077

(54) **PROCÉDÉ DE FABRICATION D'UNE ÉTIQUETTE DE RADIO-IDENTIFICATION**
VERFAHREN ZUR HERSTELLUNG EINES FÜR RFID-ETIKETTS
METHOD FOR PRODUCING A RADIO-FREQUENCY IDENTIFICATION TAG

(30) Priorité: 28.10.2013 FR 1360511
(43) Date de publication de la demande: 07.09.2016
(73) Titulaire: Tagsys, 13600 La Ciotat (FR)
(72) Inventeur: ELBAZ, Didier, F-13010 Marseille (FR); COMBES, François, F-13012 Marseille (FR); D'ANNUNZIO Franck, 13600 La Ciotat (FR)
(74) Mandataire: Novagraaf Technologies
(86) Numéro de dépôt international: PCT/FR2014/052688
(87) Numéro de publication internationale: WO 2015/063393

(56) Documents cités:
- EP-A1- 2 306 371
- WO-A1-95/33246
- WO-A1-2012/104765
- DE-A1-102006 011 596

## Description

### Domaine technique

La présente invention se rapporte au domaine des étiquettes de radio-identification et plus particulièrement de leur fabrication.

### Etat de la technique

Les étiquettes de radio-identification également appelées étiquettes RFID sont bien connus pour identifier toutes sortes de biens ou objets, notamment des vêtements ou des articles de blanchisserie quelconques.

A cet effet, l'étiquette RFID doit généralement être flexible et être capable de supporter un certain nombre de traitements appliqués à l'objet tout au long de sa période d'utilisation, à savoir des opérations répétées de lavage, de repassage et de pliage.

Pour ce genre d'objet, il est connu, de par le document WO 2012/1206063 déposée par la présente Demanderesse, de réaliser les étiquettes RFID avec un matériau textile particulier compatible avec des opérations de soudage par ultrason. L'étiquette RFID comporte de manière habituelle un module de radio-identification (ou module RFID), tel que le module MUTRAK™ commercialisé par la société TAGSYS, et une antenne électrique externe couplée à ce module, ces deux composants étant fixés sur une bande de matériau textile.

Le processus de fabrication de cette étiquette comprend généralement les étapes suivantes:
1) tissage de l'antenne électrique dans une bande de matériau textile; l'antenne électrique est classiquement composée de deux fils de 90 brins d'alliage métallique inoxydable torsadés et elle est tissée en même temps que la bande textile ou après celle-ci; en variante, l'antenne peut être cousue sur la bande textile après tissage de celle-ci;
2) dépôt d'une couche adhésive sur la bande textile à l'endroit ou le module RFID est à coller ou sur la face inférieure du module RFID pour coller le module RFID à l'endroit prévu, le module RFID étant positionné par rapport à l'antenne électrique de manière à optimiser leur couplage électromagnétique; la couche adhésive est généralement une colle réalisant un collage à froid du module RFID sur la bande textile;
3) pliage de la bande de matériau textile en deux de manière à placer le module RFID et l'antenne électrique entre deux demi-bandes de matériau textile; en variante, une deuxième bande textile peut être apposée sur la première bande pour recouvrir le module RFID et l'antenne;
4) soudage des deux demi-bandes ou de la deuxième bande par ultrason de manière à les faire fondre au moins partiellement autour du module RFID et éventuellement de l'antenne électrique afin de maintenir mécaniquement en position le module RFID entre ces deux bandes ou demi-bandes.

L'étape de tissage est généralement précédée par une étape de gainage des fils conducteurs de l'antenne pour réduire l'usure par abrasion de l'outil de tissage du support en matériau textile.
Ce procédé de fabrication présente des inconvénients parmi lesquels:
- ce processus de fabrication nécessite l'emploi de tissus couteux qui soient compatibles avec la technique de soudage par ultrason; ceci exclut par exemple l'utilisation de matériaux comme le coton qui ne fondent pas par ultrason ou apport de chaleur;
- il est nécessaire de gainer le fil d'antenne pour le tisser avec le matériau textile pour réduire l'usure par abrasion de l'outil de tissage;
- la soudure par ultrason est relativement difficile à maitriser en termes de positionnement puisqu'il faut éviter d'endommager l'antenne et le module RFID; et
- le procédé de fabrication comprend de nombreuses étapes; l'étiquette est donc complexe à réaliser.

Le document WO2013/093826 décrit également un procédé de fabrication d'étiquettes RFID dans lequel l'antenne électrique est formée puis déposée sur une couche d'adhésif préalablement déposée sur un support en papier. Le module RFID est ensuite connecté directement par soudure en deux points de l'antenne électrique. Ce procédé a toujours pour inconvénient de nécessiter une étape de soudage complexe à mettre en oeuvre.
Le brevet EP 2 405 054 décrit également un procédé de réalisation d'étiquettes RFID dans lequel le support textile comprend une poche dans lequel est inséré le module RFID. Ce module RFID comprend une puce RFID et une antenne à champ proche connectée à la puce. L'étiquette comprend également une antenne à champ lointain comprenant une partie incurvée enfermant au moins partiellement une circonférence de la puce RFID. Cette antenne à champ lointain est appliquée par couture, par impression laser ou par collage sur la poche. L'antenne à champ lointain n'est pas protégée puisqu'elle est appliquée ou rapportée sur le support textile comprenant la poche. Le procédé comprend en outre une étape de fermeture, par exemple par couture, de la poche, complexe à réaliser sur une étiquette comportant des parties en relief (poche munie du module RFID) . Il en est de même pour l'étape d'application de l'antenne à champ lointain.

Le document DE102006011596 décrit un procédé de fabrication d'une étiquette de radio-identification comprenant un support en matériau textile destiné à recevoir un module de radio-identification couplé à une antenne électrique, comportant les étapes suivantes:
1) dépôt d'une couche de matériau adhésif sur une zone du support en matériau textile comprenant ladite antenne électrique, ladite couche de matériau adhésif étant déposée sur une zone recouvrant au moins partiellement ladite antenne électrique;
2) dépôt dudit module de radio-identification sur l'antenne électrique et la couche de matériau adhésif, le module de radio-identification étant positionné de manière à être couplé à l'antenne électrique et au moins partiellement en contact avec la couche de matériau adhésif;
3) pressage à chaud (E5) du support.

### Résumé de l'invention

Un objet de l'invention est de proposer un procédé permettant de réduire le coût de fabrication de l'étiquette et de simplifier son processus de fabrication.

A cet effet, l'invention concerne un procédé de fabrication d'une étiquette de radio-identification comprenant un support en matériau textile destiné à recevoir un module de radio-identification couplé à une antenne électrique, caractérisé en ce qu'il comporte les étapes suivantes:
a) dépôt d'une couche de matériau adhésif thermodurcissable sur une zone du support en matériau textile comprenant éventuellement ladite antenne électrique, ladite couche de matériau adhésif étant déposée sur une zone recouvrant au moins partiellement ladite antenne électrique si ledit support en matériau comprend déjà ladite antenne électrique;
b) si ledit support en matériau textile ne comprend pas l'antenne électrique, dépôt de ladite antenne électrique sur la couche de matériau adhésif;
c) dépôt dudit module de radio-identification sur l'antenne électrique et la couche de matériau adhésif, le module de radio-identification étant positionné de manière à être couplé à l'antenne électrique et au moins partiellement en contact avec la couche de matériau adhésif;
d) pliage du support en matériau textile ou dépôt d'une bande de matériau textile de manière à recouvrir ladite antenne électrique et ledit module de radio-identification; et
e) pressage à chaud du support en matériau textile plié ou du support en matériau textile muni de la bande en matériau textile de manière à enfouir au moins partiellement l'antenne électrique et le module de radio-identification dans la couche de matériau adhésif et à polymériser au moins partiellement ladite couche de matériau adhésif.

Selon l'invention, la polymérisation du matériau adhésif conduit à un matériau stable au moins thermiquement pour supporter de nombreux cycles mécaniques et/ou chimiques de blanchisserie (lavage, rinçage, séchage,...). Selon l'invention, le module de radio-identification et l'antenne électrique sont maintenus en position sur le support en matériau textile par la couche de matériau adhésif polymérisée.

Le procédé ne comporte pas d'étape de soudage par ultrason ou équivalents. Le support en matériau textile n'a donc pas besoin de pouvoir fondre sous l'effet de la chaleur. La gamme de textiles possibles est donc plus large et permet d'utiliser des matériaux textiles moins couteux.

Selon un mode de réalisation, le matériau textile est sélectionné parmi l'un des matériaux suivants: coton, nylon, polyester, viscose, matière synthétique.

Selon un mode de réalisation dans lequel le support en matériau textile est plié en deux parties égales, la couche de matériau adhésif est déposée, avant pliage, sur la totalité de la surface de l'une des deux parties. Le pressage à chaud peut donc se faire sur la totalité de cette surface, ce qui simplifie grandement sa réalisation.

Selon un mode de réalisation particulier, le support en matériau textile est personnalisé avec un logo, lequel logo est tissé avec ledit support ou brodé ou imprimé sur le dit support avant l'étape a). Cette étape de personnalisation graphique est alors simple à mise en oeuvre (avant la mise en place de l'antenne et du module). Par ailleurs, le procédé ne comportant pas d'étape de soudure, la qualité visuelle finale du logo ne risque pas d'être altérée par les étapes à suivre.

Selon un mode de réalisation particulier, l'antenne électrique est réalisée avant dépôt sur la couche de matériau adhésif. L'antenne électrique peut alors être formée par pliage d'un ou plusieurs fils en matériau conducteur. En variante, elle peut être réalisée par gravure chimique, par impression jet d'encre conductrice, par sérigraphie d'encre conductrice ou par découpage laser dans une feuille de matériau conducteur.

Selon un autre mode de réalisation, l'antenne électrique est, avant dépôt de la couche de matériau adhésif, tissée avec ledit support ou cousue ou brodée sur ledit support.

Selon un autre mode de réalisation, l'antenne électrique est formée lors de son dépôt sur ladite couche de matériau adhésif. Elle est pré-positionnée à chaud sur ladite couche de matériau adhésif.

Selon un mode de réalisation particulier, l'antenne électrique comporte au moins un fil conducteur en méandres

Selon un mode de réalisation particulier, l'antenne comporte au moins un fil conducteur comprenant une pluralité de brins conducteurs. Selon l'invention, le fil conducteur est aplati lors de l'étape de pressage à chaud de manière à obtenir une antenne plus plane, ce qui permet d'augmenter la surface de réflexion de l'antenne (ou Delta RCS pour Radar Cross Section dans la littérature Anglo-saxonne) et d'améliorer les caractéristiques radiofréquences du module de radio-identification.

Selon un mode de réalisation, le procédé comprend en outre une étape de test et/ou une étape d'encodage en ligne dudit module de radio-identification.

Selon un mode de réalisation particulier, le procédé comporte en outre une étape de rajout d'un élément raidisseur réalisé en un matériau souple et résilient pour donner à l'étiquette, en l'absence d'effort exercée sur elle, une forme prédéterminée. Cette étape peut être mise en oeuvre à différents stades du procédé.

### Brève description des figures

D'autres avantages pourront encore apparaître à l'homme du métier à la lecture des exemples ci-dessous, illustrés par les figures annexées, donnés à titre illustratif.
- La figure 1 illustre schématiquement les étapes du procédé de l'invention;
- La figure 2 est un organigramme des étapes du procédé de l'invention selon un premier mode de réalisation;
- La figure 3 est un organigramme des étapes du procédé de l'invention selon un deuxième mode de réalisation;
- La figure 4 est une vue schématique d'une première ligne de production apte à mettre en oeuvre le procédé de l'invention et;
- La figure 5 est une vue schématique d'une deuxième ligne de production apte à mettre en oeuvre le procédé de l'invention

### Description détaillée de l'invention

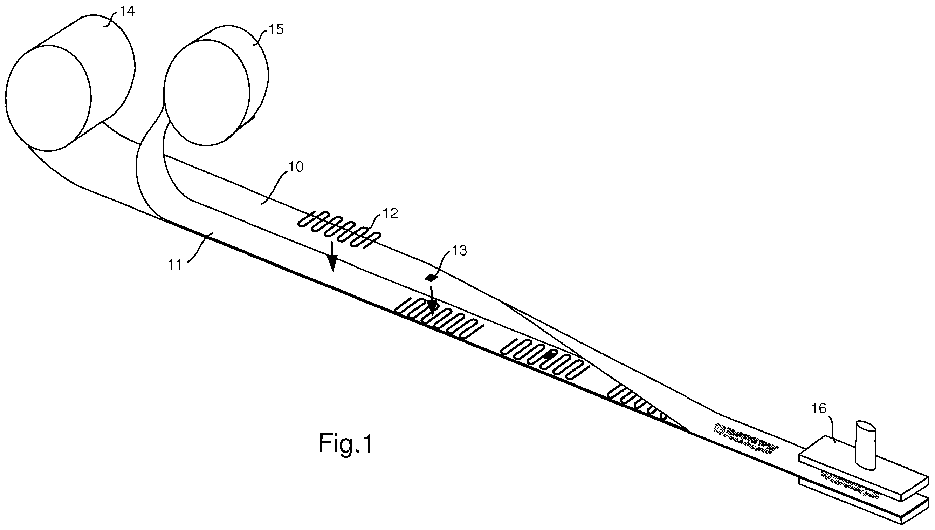

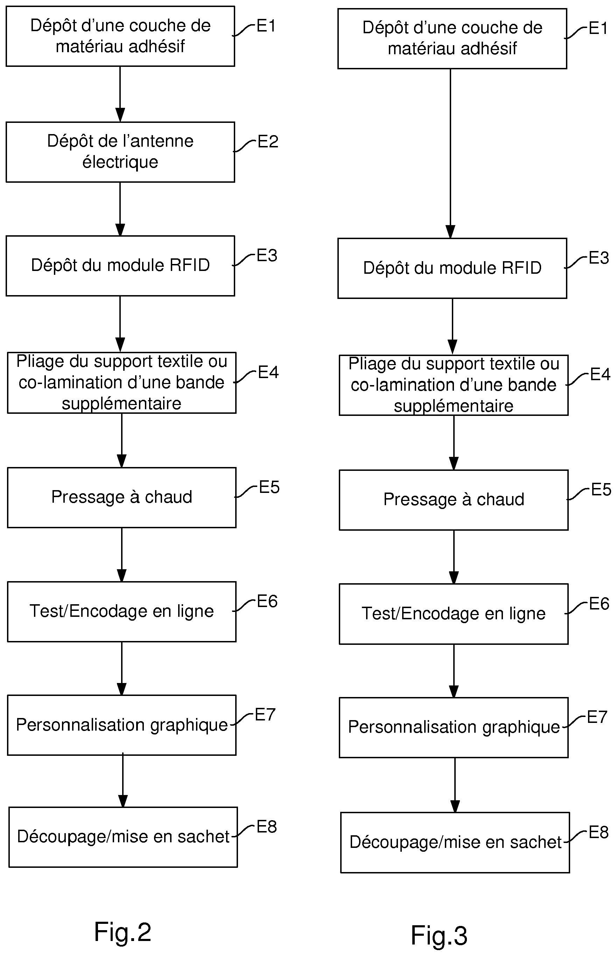

Selon l'invention, les étiquettes RFID peuvent être produites à partir d'un matériau textile avec ou sans antenne électrique pré-tissée ou pré-cousue ou pré-brodée avec le matériau. La fabrication d'étiquettes de radio-identification à partir d'un matériau textile sans antenne électrique est illustrée par les figures 1 et 2. L'utilisation d'un matériau textile avec antenne électrique pré-tissée ou pré-cousue est illustrée par la Figure 3.

On se réfère tout d'abord aux figures 1 et 2. Selon une première étape référencée E1, le procédé de l'invention comporte une étape de dépôt d'une couche 11 de matériau adhésif thermodurcissable sur un support 10 de matériau textile formant le support du module RFID et de l'antenne de l'étiquette.

Le support 10 se présente sous la forme d'une bande issue d'une bobine 14 de matériau textile. Le matériau textile peut être du textile standard, par exemple du coton, du nylon, du polyester, de la viscose ou de la matière synthétique. La bobine 14 est déroulée avant dépôt du matériau adhésif.

La couche 11 de matériau adhésif est déposée au moins sur une moitié de la face supérieure du support, par exemple la moitié inférieure, comme montré à la figure 1. Elle est notamment déposée sur la zone du support devant recevoir l'antenne électrique et le module RFID. Elle est de préférence déposée sur la moitié de la face supérieure du support si ce dernier est plié en deux dans une étape à suivre (étape E4) et elle est de préférence déposée sur la totalité de la face supérieure du support si ce dernier est recouvert par une deuxième bande de matériau textile lors de cette étape ultérieure (étape E4).

Comme illustré par la figure 1, la couche de matériau adhésif est, avant dépôt sur le support, présente sur la face inférieure d'un film support en bobine (bobine 15). La face inférieure du film est plaquée contre le matériau textile lors de l'étape de dépôt de la couche de matériau adhésif puis le film support est retiré de la couche adhésive déposée sur le matériau textile.

Selon une deuxième étape référencée E2, une antenne électrique 12 est déposée sur la couche de matériau adhésif 11.

Selon un mode de réalisation particulier, l'antenne électrique 12 comporte deux fils conducteurs de section circulaire comportant 90 brins torsadés. Les fils conducteurs comprennent avantageusement des méandres pour des raisons de compacité et de tenue mécanique comme illustré ici.

Selon un mode de réalisation particulier, l'antenne électrique 12 est réalisée avant son dépôt sur la couche de matériau adhésif. Elle peut alors être formée par pliage d'un ou plusieurs fils en matériau conducteur. En variante, elle peut être réalisée par gravure chimique, par impression jet d'encre conductrice, par sérigraphie d'encre conductrice ou par découpage laser dans une feuille de matériau conducteur.

Selon un autre mode de réalisation, l'antenne électrique 12 est formée lors de son dépôt sur ladite couche de matériau adhésif. Elle est pré-positionnée à chaud sur ladite couche de matériau adhésif. Cela peut aussi être réalisé à froid si le tack (ou pégosité) du matériau adhésif est suffisant à température ambiante. C'est le cas de certaines colles.

Selon un autre mode de réalisation correspondant à la figure 3, l'antenne électrique 12 est assemblée au matériau textile avant dépôt de la couche de matériau adhésif. Elle est par exemple tissée en même que le support de matériau ou cousue ou brodée sur celui-ci après tissage de ce dernier. Dans ce mode de réalisation, le procédé ne comporte donc pas d'étape E2.

Selon une troisième étape référencée E3, un module RFID 13 est déposé sur l'antenne électrique 12 et la couche de matériau adhésif 11. Le module RFID 13 est par exemple le module MUTRAK™ commercialisé par la société TAGSYS.

Le module RFID 13 est positionné au milieu de l'antenne électrique 12 pour optimiser leur couplage. La face inférieure du module RFID est au moins partiellement en contact avec la couche de matériau adhésif 11.

Selon une quatrième étape référencée E4, le support textile 10 est pliée en deux de manière à recouvrir l'antenne électrique 12 et le module RFID 13. La moitié supérieure du support est rabattue sur sa moitié inférieure de manière à former une poche textile renfermant l'antenne électrique 12 et le module RFID 13.

En variante, au lieu de plier le support 10 en deux, on peut envisager de déposer ou co-laminer une deuxième bande textile sur le support 10, ladite deuxième bande présentant sensiblement la même largeur que le support 10. Dans ce mode de réalisation, lors de l'étape E1, la couche de matériau adhésif 11 est de préférence déposée sur la totalité de la surface supérieure du support 10.

Selon une cinquième étape référencée E5, la bande de matériau textile pliée est pressée à chaud de manière à enfouir au moins partiellement l'antenne électrique 12 et le module RFID dans la couche de matériau adhésif 11 et à durcir la couche de matériau adhésif 11.

Pendant le pressage à chaud, la couche de matériau adhésif 11 se polymérise au moins partiellement et devient thermiquement stable sur les plages d'utilisation de l'étiquette. Elle est également sélectionnée pour ne pas se dégrader au contact de l'eau et aux agents chimiques couramment utilisés en blanchisserie. L'opération de pressage à chaud permet de plaquer les deux parties du support 10 plié l'une contre l'autre et de plaquer le module RFID 13 contre l'antenne électrique 12 pour obtenir de bonnes performances radiofréquence du module RFID.

La polymérisation de la couche de matériau adhésif permet de figer la position du module RFID 13 et de l'antenne électrique 12 dans le support en matériau textile pour que le module RFID et l'antenne conservent ultérieurement leurs performances mécaniques, thermiques et radiofréquences, notamment après des opérations répétées de lavage, rinçage et séchage.

On utilise avantageusement une colle thermodurcissable polymérique présentant deux états: un premier état dit adhésif entre 45° et 100°C dans lequel le tack (ou pégosité) est suffisant pour maintenir en place une antenne et un deuxième état dit stable qui est obtenu après un cycle de chauffage entre 180°et 220°C puis de refroidissement. L'opération de dépôt de l'antenne électrique et du module RFID se fait lorsque la colle est dans l'état adhésif.

Le pressage à chaud de l'antenne électrique 12 permet également d'aplatir les fils conducteurs de l'antenne de manière à obtenir une surface équivalente de réflexion (Delta Radar Cross Section dans la littérature anglo-saxonne) plus élevée, ce qui contribue encore à améliorer les caractéristiques radiofréquences du module RFID.

Selon une sixième étape référencée E6, le module RFID 13 est testé puis encodé en ligne.

Des informations diverses, telles que le nom et/ou le logo du fabricant ou la référence du produit, peuvent être imprimées sur l'étiquette à différents stades du processus de fabrication, notamment avant l'étape E1 ou après l'étape E4 de pliage ou avant l'étape E6 de test et/ou encodage en ligne ou après celle-ci.

Dans la figure 2, cette étape d'impression ou de personnalisation graphique, référencée E7, est réalisée après l'étape E6 de test et/ou encodage en ligne.

Il peut être intéressant de réaliser cette étape E7 plus en amont, notamment avant l'étape E1, après déroulement de la bobine de matériau textile 14 pour ne pas avoir à réaliser une impression sur un support comprenant des zones en relief, ce qui est le cas après l'étape E4 de pliage. En effet, il est difficile d'obtenir une impression avec des contours nets lorsque le support n'est pas plan. Dans le cas des procédés de l'art antérieur avec une étape de soudure par des ultra-sons, il n'est pas possible de réaliser l'étape d'impression avant l'étape de soudure car cette dernière déforme le support textile et modifie le pas du tissage de sorte qu'il n'est pas possible d'obtenir une impression avec des contours nets.

Selon un mode de réalisation particulier, la personnalisation visuelle graphique est réalisée avant l'étape E1 par tissage multicolore ou impression ou broderie, réduisant ainsi les coûts de cette étape et sa mise en oeuvre tout en ayant une qualité visuelle finale optimale.

Selon une septième étape référencée E8, l'étiquette de radio-identification est découpée et mise en sachet. En variante, les étiquettes produites sont mises en bobine.

Bien que non illustrée ici, le procédé peut également comporter une étape de rajout d'un élément raidisseur réalisé en un matériau souple et résilient pour donner à l'étiquette, en l'absence d'effort exercée sur elle, une forme prédéterminée. Cet élément est par exemple un élément plan ou une tige ou un tube en silicone. Il a pour but de veiller à ce que l'antenne électrique revienne à sa forme d'origine lorsque l'étiquette a été pliée.

Cette étape peut être mise en oeuvre à différents stades du procédé. Si on veut que l'élément raidisseur soit recouvert par le support textile et collé à celui-ci par la couche 11 de matériau adhésif, la couche adhésive est de préférence déposée sur la totalité du support 10 textile. L'antenne 12 et le module RFID sont déposés sur la moitié inférieure du support et l'élément raidisseur est déposé sur la moitié supérieure avant pliage. Le dépôt de cet élément raidisseur est alors réalisé entre l'étape E1 et l'étape E4.

On peut aussi rajouter cet élément raidisseur après l'étape E4 de pliage. Il est alors fixé sur une face externe de l'étiquette par tour moyen approprié (collage, ...)

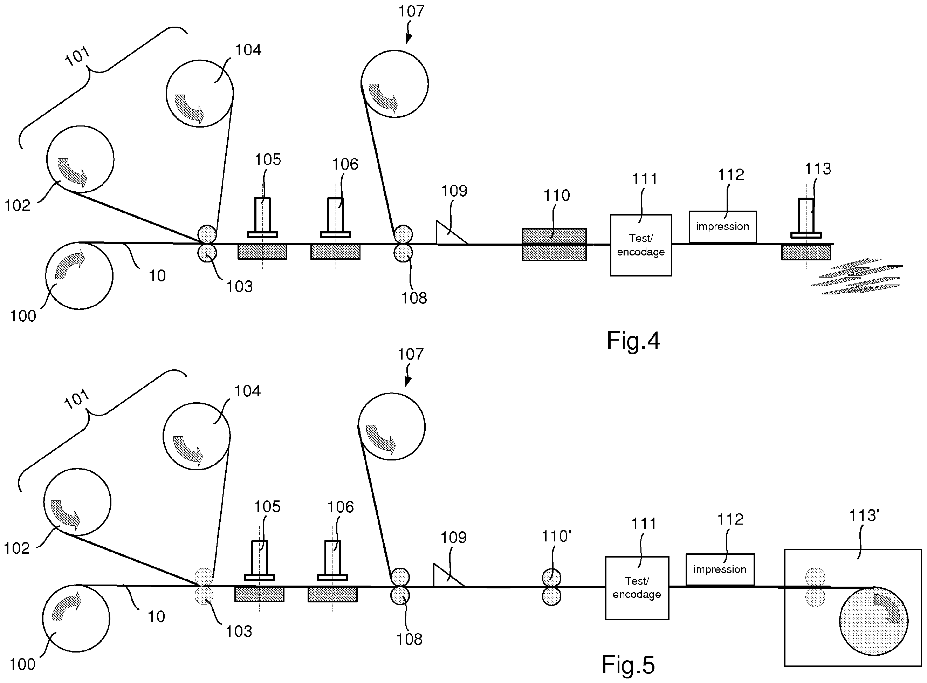

L'ensemble de ces étapes sont mises en oeuvre sur une ligne de production destinée à produire un grand nombre d'étiquettes RFID à une cadence élevée. Deux exemples de lignes de production sont représentés schématiquement aux figures 4 et 5. Les dispositifs communs aux deux lignes de production présentent les mêmes références dans les deux figures.

La ligne de production comprend:
- un dérouleur 100 apte à dérouler une bobine de matériau textile, ce matériau étant destiné à former le support 10 de l'étiquette;
- une unité 101 de dépôt de la couche de matériau adhésif 11 sur le support 10; cette unité comprend par exemple un dérouleur 102 apte à dérouler une bobine de matériau adhésif thermodurcissable munie d'un film protecteur sur la face supérieure du matériau adhésif, des rouleaux 103 pour appliquer la face inférieure du matériau adhésif contre la surface supérieure du support textile et un enrouleur 104 sur lequel est enroulé le film protecteur;
- une unité 105 de dépôt de l'antenne électrique sur la couche de matériau adhésif;
- une unité 106 de dépôt du module RFID sur l'antenne;
- une unité 107 de dépôt d'un élément raidisseur sur ou à coté de l'antenne et le module RFID; cet élément raidisseur est par exemple un tube en silicone résilient qui est déroulé à partir d'une bobine et est déposé au moyens de rouleaux 108 sur le support;
- un poste de pliage 109 du support textile;
- une unité 110 ou 110' de pressage à chaud du support plié; dans la figure 4, cette unité comprend une plaque chauffée venant presser le support plié contre une enclume; dans la figure 5, cette unité comporte deux rouleaux chauffés disposés au-dessus et au-dessous du support plié pour presser ledit support;
- une unité 111 de test et d'encodage en ligne du module RFID des étiquettes,
- une unité 112 d'impression ou de marquage laser pour imprimer ou marquer des informations sur les étiquettes; et
- une unité 113 de découpe et de mise en sachet des étiquettes (figure 4) ou une unité 113' de mise en rouleau du ruban d'étiquettes issus des étapes précédentes (figure 5).

Les modes de réalisation décrits ci-dessus ont été donnés à titre d'exemple. Il est évident pour l'homme de l'art qu'ils peuvent être modifiés. Certaines étapes comme l'étape de rajout de l'élément raidisseur et/ou l'étape de test/encodage en ligne et/ou l'étape d'impression peuvent être supprimées.

## Revendications

1. Procédé de fabrication d'une étiquette de radio-identification comprenant un support (10) en matériau textile destiné à recevoir un module de radio-identification (13) couplé à une antenne électrique (12), **caractérisé en ce qu'**il comporte les étapes suivantes:
a) dépôt (E1) d'une couche (11) de matériau adhésif thermodurcissable sur une zone du support (10) en matériau textile comprenant éventuellement ladite antenne électrique, ladite couche de matériau adhésif étant déposée sur une zone recouvrant au moins partiellement ladite antenne électrique si ledit support en matériau comprend déjà ladite antenne électrique;
b) si ledit support en matériau textile ne comprend pas l'antenne électrique, dépôt (E2) de ladite antenne électrique (12) sur la couche de matériau adhésif;
c) dépôt (E3) dudit module de radio-identification (13) sur l'antenne électrique et la couche de matériau adhésif, le module de radio-identification étant positionné de manière à être couplé à l'antenne électrique et au moins partiellement en contact avec la couche de matériau adhésif;
d) pliage (E4) du support (10) en matériau textile ou dépôt d'une bande de matériau textile de manière à recouvrir ladite antenne électrique et ledit module de radio-identification; et
e) pressage à chaud (E5) du support en matériau textile plié ou du support en matériau textile muni de la bande en matériau textile de manière à enfouir au moins partiellement l'antenne électrique et le module de radio-identification dans la couche de matériau adhésif et à polymériser au moins partiellement ladite couche de matériau adhésif.

2. Procédé selon la revendication 1, **caractérisé en ce que** le matériau textile est sélectionné parmi l'un des matériaux suivants: coton, nylon, polyester, viscose, matière synthétique.

3. Procédé selon la revendication 1, dans lequel le support (10) en matériau textile est plié en deux parties égales, **caractérisé en ce que** la couche de matériau adhésif (11) est déposée, avant pliage, sur la totalité de la surface de l'une des deux parties.

4. Procédé selon l'une quelconque des revendications précédentes, **caractérisé en ce que** le support en matériau textile est personnalisé avec un logo, lequel logo est tissé avec ledit support ou brodé ou imprimé sur le dit support avant l'étape a).

5. Procédé selon l'une quelconque des revendications précédentes, **caractérisé en ce que** l'antenne électrique (12) est réalisée avant dépôt sur ladite couche de matériau adhésif.

6. Procédé selon l'une quelconque des revendications 1 à 5, **caractérisé en ce que**, le support (10) en matériau textile étant préalablement équipé de l'antenne électrique, ladite antenne électrique est tissée avec ledit support ou cousue ou brodée sur ledit support.

7. Procédé selon l'une quelconque des revendications 1 à 5, **caractérisé en ce que** l'antenne électrique est formée lors de son dépôt sur ladite couche de matériau adhésif.

8. Procédé selon l'une quelconque des revendications précédentes, **caractérisé en ce que** l'antenne électrique (12) comporte au moins un fil conducteur en méandres

9. Procédé selon l'une quelconque des revendications précédentes, **caractérisé en ce que** l'antenne électrique (12) comporte au moins un fil conducteur comprenant une pluralité de brins conducteurs.

10. Procédé selon l'une quelconque des revendications précédentes, **caractérisé en ce qu'**il comprend en outre une étape (E6) de test et/ou une étape d'encodage en ligne dudit module de radio-identification.

11. Procédé selon l'une quelconque des revendications précédentes, **caractérisé en ce qu'**il comporte en outre une étape de rajout d'un élément raidisseur réalisé en un matériau souple et résilient pour donner à l'étiquette, en l'absence d'effort exercée sur elle, une forme prédéterminée.

## Patentansprüche

1. Verfahren zur Herstellung eines Funkidentifikationsetiketts, umfassend einen Träger (10) aus Textilmaterial, der ausgelegt ist, um ein Funkidentifikationsmodul (13) zu empfangen, das an eine elektrische Antenne (12) gekoppelt ist, **dadurch gekennzeichnet, dass** es die folgenden Schritte umfasst:
a) Ablegen (E1) einer Schicht (11) aus wärmehärtbarem haftendem Material auf einem Bereich des Trägers (10) aus Textilmaterial, umfassend eventuell die elektrische Antenne, wobei die Schicht aus haftendem Material auf einem Bereich abgelegt ist, der mindestens teilweise die elektrische Antenne abdeckt, wenn der Träger aus Material bereits die elektrische Antenne umfasst;
b) wenn der Träger aus Textilmaterial die elektrische Antenne nicht umfasst, Ablegen (E2) der elektrischen Antenne (12) auf der Schicht aus haftendem Material;
c) Ablegen (E3) des Funkidentifikationsmoduls (13) auf der elektrischen Antenne und der Schicht aus haftendem Material, wobei das Funkidentifikationsmodul derart positioniert ist, dass es an die elektrische Antenne gekoppelt ist und mindestens teilweise mit der Schicht aus haftendem Material in Kontakt steht;
d) Falten (E4) des Trägers (10) aus Textilmaterial oder Ablegen eines Bands aus Textilmaterial derart, dass es die elektrische Antenne und das Funkidentifikationsmodul abdeckt; und
e) Heißpressen (E5) des Trägers aus gefaltetem Textilmaterial oder des Trägers aus Textilmaterial, versehen mit dem Band aus Textilmaterial, derart, um mindestens teilweise die elektrische Antenne und das Funkidentifikationsmodul in der Schicht aus haftendem Material einzuarbeiten und die Schicht aus haftendem Material mindestens teilweise zu polymerisieren.

2. Verfahren nach Anspruch 1, **dadurch gekennzeichnet, dass** das Textilmaterial ausgewählt ist aus einem der folgenden Materialien: Baumwolle, Nylon, Polyester, Viskose, Kunststoff.

3. Verfahren nach Anspruch 1, wobei der Träger (10) aus Textilmaterial in zwei gleichen Teilen gefaltet ist, **dadurch gekennzeichnet, dass** die Schicht aus haftendem Material (11) vor dem Falten auf der Gesamtheit der Oberfläche eines der zwei Teile abgelegt ist.

4. Verfahren nach einem der vorhergehenden Ansprüche, **dadurch gekennzeichnet, dass** der Träger aus Textilmaterial mit einem Logo personalisiert ist, wobei das Logo mit dem Träger gewebt ist oder auf dem Träger vor Schritt a) gestickt oder gedruckt ist.

5. Verfahren nach einem der vorhergehenden Ansprüche, **dadurch gekennzeichnet, dass** die elektrische Antenne (12) vor dem Ablegen auf der Schicht aus haftendem Material hergestellt wird.

6. Verfahren nach einem der Ansprüche 1 bis 5, **dadurch gekennzeichnet, dass** da der Träger (10) aus Textilmaterial zuvor mit der elektrischen Antenne ausgestattet wird, die elektrische Antenne mit dem Träger gewoben oder auf dem Träger genäht oder gestickt ist.

7. Verfahren nach einem der Ansprüche 1 bis 5, **dadurch gekennzeichnet, dass** die elektrische Antenne bei ihrer Ablage auf der Schicht aus haftendem gebildet wird.

8. Verfahren nach einem der vorhergehenden Ansprüche, **dadurch gekennzeichnet, dass** die elektrische Antenne (12) mindestens einen mäandernden leitfähigen Draht umfasst.

9. Verfahren nach einem der vorhergehenden Ansprüche, **dadurch gekennzeichnet, dass** die elektrische Antenne (12) mindestens einen leitfähigen Draht umfasst, der eine Vielzahl von leitfähigen Litzen umfasst.

10. Verfahren nach einem der vorhergehenden Ansprüche, **dadurch gekennzeichnet, dass** es außerdem einen Schritt (E6) des Testens und/oder einen Schritt des Online-Codierens des Funkidentifikationsmoduls umfasst.

11. Verfahren nach einem der vorhergehenden Ansprüche, **dadurch gekennzeichnet, dass** es außerdem einen Schritt des Hinzufügens eines Versteifungselements umfasst, hergestellt aus einem flexiblen und elastischen Material, um dem Etikett bei Abwesenheit einer Kraft, die auf es ausgeübt wird, eine vorbestimmte Form zu geben.

## Claims

1. Method for manufacturing a radio-frequency identification tag comprising a textile material backing (10) intended to receive a radio-frequency identification module (13) coupled with an electrical antenna (12), **characterised in that** in it comprises the following steps:
a) depositing (E1) a layer (11) of thermosetting adhesive material on an area of the textile material backing (10) optionally comprising said electrical antenna, said layer of adhesive material being deposited on an area covering at least partially said electrical antenna if said textile material backing already comprises said electrical antenna;
b) if said textile material backing does not comprise the electrical antenna, depositing (E2) said electrical antenna (12) on the layer of adhesive material;
c) depositing (E3) said radio-frequency identification module (13) on the electrical antenna and the layer of adhesive material, the radio-frequency identification module being positioned so as to be coupled with the electrical antenna and at least partially in contact with the layer of adhesive material;
d) folding (E4) the textile material backing (10) or depositing a strip of textile material so as to cover said electrical antenna and said radio-frequency identification module; and
e) hot-pressing (E5) the folded textile material backing or the textile material backing provided with the textile material strip so as to embed at least partially the electrical antenna and the radio-frequency identification module in the layer of adhesive material and polymerise at least partially said layer of adhesive material.

2. Method according to claim 1, **characterised in that** the textile material is selected from among one of the following materials: cotton, nylon, polyester, viscose, synthetic material.

3. Method according to claim 1, wherein the textile material backing (10) is folded into two equal parts, **characterised in that** the layer of adhesive material (11) is deposited, before folding, on the entire surface of one of the two parts.

4. Method according to any one of the preceding claims, **characterised in that** the textile material backing is personalised with a logo, said logo being woven with said backing or embroidered or printed on said backing before step a).

5. Method according to any one of the preceding claims, **characterised in that** the electrical antenna (12) is embodied before depositing on said layer of adhesive material.

6. Method according to any one of claims 1 to 5, **characterised in that**, the textile material backing (10) being previously equipped with the electrical antenna, said electrical antenna is woven with said backing or sewn or embroidered onto said backing.

7. Method according to any one of claims 1 to 5, **characterised in that** the electrical antenna is formed during the deposition thereof on said layer of adhesive material.

8. Method according to any of the preceding claims, **characterised in that** the electrical antenna (12) includes at least one meander conductive wire.

9. Method according to any one of the preceding claims, **characterised in that** the electrical antenna (12) includes at least one conductive wire comprising a plurality of conductive strands.

10. Method according to any one of the preceding claims, **characterised in that** it further comprises a step (E6) for testing and/or a step for inline encoding of said radio-frequency identification module.

11. Method according to any one of the preceding claims, **characterised in that** it further includes a step for adding a stiffening element made of a flexible and resilient material to give the tag, in the absence of force exerted thereon, a predetermined shape.
